# EUROPÄISCHE PATENTSCHRIFT

(11) **EP 3 538 962 B1**
(45) Veröffentlichungstag und Bekanntmachung des Hinweises auf die Patenterteilung: **30.11.2022**
(21) Anmeldenummer: 17788163.8
(22) Anmeldetag: 10.10.2017
(51) Int. Cl.: G05B 23/02

(54) **VERFAHREN ZUR ANALYSE VON FEHLFUNKTIONEN IN EINER ANLAGE DER PROZESSAUTOMATISIERUNG**
METHOD FOR ANALYSING MALFUNCTIONS IN A SYSTEM OF PROCESS AUTOMATION
PROCÉDÉ D'ANALYSE DE DYSFONCTIONNEMENTS DANS UNE INSTALLATION DE L'AUTOMATISATION DE PROCESSUS

(30) Priorität: 11.11.2016 DE 102016121623
(43) Veröffentlichungstag der Anmeldung: 18.09.2019
(73) Patentinhaber: Endress+Hauser Process Solutions AG, 4153 Reinach (CH)
(72) Erfinder: MAYER, Michael, 4104 Oberwil (CH); PFLUG, Jan, 4056 Basel (CH)
(74) Vertreter: Trenkle, Dennis
(86) Internationale Anmeldenummer: PCT/EP2017/075803
(87) Internationale Veröffentlichungsnummer: WO 2018/086812

(56) Entgegenhaltungen:
- DE-A1- 10 217 107
- DE-A1-102016 108 197
- US-A1- 2006 156 967
- US-A1- 2010 141 421
- Jason P. Wright: "Alarm Management Standards and Best Practices", , 15. November 2011 (2011-11-15), XP055441614, DOI: 10.1007/s10346-016-0731-5 Gefunden im Internet: URL:https://www.rockwellautomation.com/res ources/downloads/rockwellautomation/pdf/ev ents/automation-fair/2011/psug/afpsug11_ed 16.pdf [gefunden am 2018-01-17] & Jason P. Wright: "Alarm Management Standards and Best Practices", , 15. November 2011 (2011-11-15), Seite 41, XP055441629, Gefunden im Internet: URL:https://www.rockwellautomation.com/res ources/downloads/rockwellautomation/pdf/ev ents/automation-fair/2011/psug/afpsug11_ed 16.pdf [gefunden am 2018-01-17]
- Anonymous: "Alarm Management Standards - Are You Taking Them Seriously? Alarm Management Standards - Are You Taking Them Seriously? 2", , 1. August 2011 (2011-08-01), XP055441779, Gefunden im Internet: URL:https://www.honeywellprocess.com/libra ry/marketing/whitepapers/honeywell-alarm-m anager-alarm-management-standards-taken-se riously-wp817.pdf [gefunden am 2018-01-17]

## Beschreibung

Die Erfindung betrifft ein Verfahren zur Analyse von Fehlfunktionen und/oder Änderungen von Gerätezuständen in einer Anlage der Automatisierungstechnik

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Leitsystem-Anwendungen (Siemens PCS7, ABB Symphony, Emerson Delta V) integriert sind.

Bei Kommunikationsproblemen in solchen Kommunikationsnetzwerken müssen Spezialisten besagte Kommunikationsnetzwerke zur Fehlersuche über einen längeren Zeitraum mit speziellen Messwerkzeugen (bspw. Oszilloskopen, etc.) überwachen und prüfen. Diese Fehlersuche ist oftmals sehr zeitaufwendig, zumal es meist nur mit teurer Spezialhardware möglich ist, mehrere dieser Kommunikationsnetzwerke parallel zu untersuchen.

Bei Fehlfunktionen, beispielsweise dem Überschreiten eines Grenzwerts, oder Änderungen am Gerätezustand der Feldgeräte, beispielsweise verursacht durch einen Neustart des Feldgeräts, wird vom Feldgerät eine Diagnosemeldung ausgegeben. Diese beschreibt die unmittelbare Ursache der aufgetretenen Fehlfunktion (bspw. "Überschreitung eines oberen Grenzwertes" oder "mangelnde Energieversorgung").

In einer Anlage der Prozessautomatisierung ist mitunter eine große Anzahl von Feldgeräten implementiert, wodurch eine immense Datenmenge - auch von besagten Diagnosemeldungen - anfällt. Diese große Datenmenge, sowie die Tatsache, dass Fehlfunktionen unregelmäßig auftreten, erschwert die Ursache nach der Fehlerursache zusätzlich oder macht sie fast unmöglich.

In einer Präsentation von Jason P. Wright: "Alarm Management Standards and Best Practices",, 15. November 2011 (2011-11-15), XP055441614, wird ein tabellenbasiertes Anzeigen von eingruppierten Diagnosedaten offenbart. Ausgehend von dieser Problematik liegt der Erfindung liegt die Aufgabe zugrunde, ein Verfahren vorzustellen, welches es auf einfache Art und Weise erlaubt, auf Ursachen von Fehlern in einer Anlage der Prozessautomatisierung zu schließen.

Die Aufgabe wird durch ein Verfahren gemäß dem Gegenstand des Anspruchs 1 gelöst.

Der große Vorteil des erfindungsgemäßen Verfahrens besteht darin, dass auf einfache und effektive Art und Weise eine große Datenmenge von Diagnosemeldungen einer Vielzahl von Feldgeräten hinsichtlich deren Fehlerursache analysiert werden kann. Das beschriebene Verfahren wird beispielsweise von einer Recheneinheit eines Bedieners ausgeführt.

Ein Gerätezustand ist beispielsweise einer der folgenden:
- Feldgerät ist eingeschaltet;
- Feldgerät ist ausgeschaltet;
- Feldgerät ist online (erfolgreiche Verbindung mit dem Kommunikationsnetzwerk);
- Feldgerät ist offline (keine Verbindung mit dem Kommunikationsnetzwerk);
- Gerätezustände nach NAMUR-Empfehlung ("Okay", "Maintenance required", etc).

Feldgeräte, welche im Zusammenhang mit der vorliegenden Erfindung erwähnt werden, sind bereits im einleitenden Teil der Beschreibung beispielhaft beschrieben.

Die Erfindung sieht vor, dass anhand des Auswertens ein Vorschlag zur Behebung einer Ursache der Fehlfunktionen und/oder der Änderungen der Gerätezustände erstellt wird. Ein Service-Techniker kann hierfür auf seinen Erfahrungsschatz zurückgreifen. Ein simples Beispiel hierfür: Werden beispielsweise immer wieder erhöhte Druckwerte eines Messmediums festgestellt, so kann als Behebungsmaßnahme der Druck gesenkt werden. Je komplexer die Auffälligkeiten ausfallen, desto erfahrener muss eine Person jedoch sein, um die passende Behebungsmaßnahme erfolgreich abschätzen zu können.

Alternativ wird daher auf eine Wissens-Datenbank zurückgegriffen. Auf dieser Datenbank befinden sich in der Vergangenheit eingesetzte Behebungsmöglichkeiten für spezifische Auffälligkeiten. Nach Ermitteln zumindest einer Auffälligkeit wird diese mit den in der Wissens-Datenbank gespeicherten Informationen verglichen und auf diese Weise eine oder mehrere zur aufgetretenen Auffälligkeit passende Behebungsmöglichkeit vorgeschlagen.

Gemäß der Erfindung ist vorgesehen, dass die eingruppierten Diagnosedaten anhand eines aus den eingruppierten Diagnosemeldungen erstellten Diagramms, insbesondere einer Heatmap, ausgewertet werden, in welchem das Auftreten der Diagnosemeldungen pro Feldgerät über die festgelegten Zeitintervalle dargestellt wird. Auf einer ersten Achse des Diagramms befinden sich hierbei die jeweiligen Feldgeräte, wessen Diagnosemeldungen in die entsprechenden Gruppen eingruppiert wurden. Auf der zweiten Achse des Diagramms sind die festgelegten Zeitintervalle dargestellt. Tritt eine Diagnosemeldung innerhalb eines Zeitintervalls auf, so wird auf dem Diagramm der Schnittpunkt zwischen dem jeweiligen Zeitintervall und dem entsprechenden Feldgerät markiert. Ist das Diagramm als Heatmap ausgestaltet, so werden zusätzlich die für ein Feldgerät innerhalb des jeweiligen Zeitintervalls aufgetretenen Diagnosemeldungen gezählt und abhängig von der ermittelten Anzahl entsprechend dargestellt (bspw. mittels unterschiedlicher Farbtöne).

Gemäß der Erfindung ist vorgesehen, dass die gruppierten Diagnosedaten anhand einer aus den gruppierten Diagnosemeldungen erstellen tabellarischen Auflistung ausgewertet werden, in welcher das Auftreten der Diagnosemeldungen pro Feldgerät über die festgelegten Zeitintervalle dargestellt wird.

Gemäß der Erfindung ist vorgesehen, dass eine Rechnereinheit das Diagramm, bzw. die tabellarische Auflistung mittels auf der Rechnereinheit implementierten Algorithmen, insbesondere Algorithmen zur Bild- oder Mustererkennung und/oder Algorithmen zur Clusterdetektion, auswertet.

In einer vorteilhaften Ausgestaltung des erfindungsgemäßen Verfahrens ist vorgesehen, dass die Diagnosemeldungen bei Auftreten zumindest einer der folgenden Fehlfunktionen, bzw. Änderungen von Gerätezuständen eines Feldgeräts erstellt werden:
- Ein Kommunikationsfehler des Feldgeräts;
- Unzureichende Energieversorgung oder Abschalten, bzw. Neustarten des Feldgeräts;
- Ein Wartungsbedarf des Feldgeräts;
- Ein Messfehler des Feldgeräts;
- Ein Fehler von zumindest einer Elektronikkomponente des Feldgeräts;
- Ein Fehler von zumindest einer Softwarekomponente des Feldgeräts; oder
- Ein Über- und/oder Unterschreiten von definierten Messbereichen.

Als Elektronikkomponenten des Feldgeräts werden insbesondere dessen Betriebselektronik (Mikroprozessor, Arbeitsspeicher, nichtflüchtiger Datenspeicher, etc.), dessen Messelektronik (Sensorkomponente, Auswerteelektronik, etc.) und dessen Schnittstellen (inkl. Elektronik zur Aufbereitung der Kommunikation, (De-)Codierung, und/oder (De-)Modulierung, etc.) bezeichnet.

Als Softwarekomponenten des Feldgeräts werden insbesondere dessen Betriebssoftware (Firmware) und dessen Ausführungssoftware bezeichnet.

Gemäß einer bevorzugten Ausgestaltung des erfindungsgemäßen Verfahrens ist vorgesehen, dass die ausgelesenen Diagnosemeldungen anhand zumindest einem der folgenden Auswahlkriterien gefiltert werden:
- anhand des Gerätetyps der Feldgeräte;
- anhand der Art der Fehlfunktion, bzw. der Änderung des Gerätezustands;
- anhand des Anlagensektors, in der die jeweiligen Feldgeräte integriert sind;
- anhand der jeweiligen Kommunikationseinheit, mit welcher die entsprechenden Feldgeräte in Kommunikationsverbindung stehen;
- anhand einer jeweiligen Kommunikationsstruktur der Feldgeräte;
- anhand von Umwelteinflüssen, welche auf die entsprechenden Feldgeräte einwirken;
- anhand einer Betriebsdauer der jeweiligen Feldgeräte;
- anhand des Alters der Feldgeräte;
- anhand einer Seriennummer und/oder anhand eines Bereichs von Seriennummern;
- anhand einer Produktcharge der Feldgeräte;
- anhand von verwendeten Bauteilen eines Lieferanten für die Anlage; oder
- anhand der jeweiligen Kommunikationseinheit, mit welcher die entsprechenden Feldgeräte in Kommunikationsverbindung stehen.

Unter einer Kommunikationsstruktur wird das verwendete Netzwerkprotokoll, aber insbesondere auch die physische Hardware (Verkabelung, Anschlussart, etc.) bezeichnet.

Bei dem Netzwerkprotokoll handelt es sich insbesondere um ein Feldbusprotokoll der Automatisierungstechnik, beispielsweise Foundation Fieldbus, Profibus PA, Profibus DP, HART, CANbus, etc. Es kann sich bei dem Netzwerkprotokol aber auch um ein Netzwerkprotokoll eines "Industrial Ethernet"-Feldbusses handeln, beispielsweise Profinet, HART-IP, Ethernet/IP.

Alternativ ist das Kommunikationsnetzwerk als Drahtlosnetzwerk ausgestaltet. Bei dem Netzwerkprotokoll handelt es sich folglich um ein Drahtlosnetzwerkprotokoll, insbesondere um WirelessHART, Bluetooth, Wifi, ZigBee, etc.

Als Umwelteinflüsse können beispielsweise Feuchtigkeit, Gase, Kondensation von Dämpfen eines aggressiven Prozessmediums, Blitzschlag bei exponierten Feldgeräten, etc. auf die Feldgeräte einwirken.

Des Weiteren können die ausgelesenen Diagnosemeldungen auch anhand der Prozesseinflüsse, wie Druck, Durchfluss, verwendetes Prozessmedium, Temperatur, etc. gefiltert werden. Beispielsweise wird die Vielzahl der Diagnosemeldungen derart gefiltert, dass nur noch Diagnosemeldungen bestehen bleiben, bei denen die Temperatur des mit dem Feldgerät in Kontakt befindliche Prozessmedium mehr als 100 °C betrugen hat. Weitere Filterungsmöglichkeiten stellen eine Filterung nach dem örtlichen Abstand der Feldgeräte zum Schaltschrank und/oder eine Filterung anhand der für den Prozess kritischen Messstellen dar.

Gemäß einer vorteilhaften Ausgestaltung des erfindungsgemäßen Verfahrens ist vorgesehen, dass die eingruppierten Diagnosemeldungen hinsichtlich zumindest einer der folgenden Auffälligkeiten ausgewertet werden:
- Gehäuftes Auftreten von Diagnosemeldungen eines oder mehrerer der Feldgeräte während eines der festgelegten Zeitintervalle;
- Gehäuftes Auftreten von Diagnosemeldungen hinsichtlich eines bestimmten Gerätetyps der Feldgeräte;
- Gehäuftes Auftreten von Diagnosemeldungen hinsichtlich einer jeweiligen Kommunikationsstruktur der Feldgeräte;
- Gehäuftes Auftreten von Diagnosemeldungen hinsichtlich eines jeweiligen Kommunikationsprotokolls der Feldgeräte;
- Gehäuftes Auftretung von Diagnosemeldungen hinsichtlich von Prozessparametern der Feldgeräte;
- Gehäuftes Auftreten von Diagnosemeldungen hinsichtlich eines Prozessmediums, mit welchem die entsprechenden Feldgeräte in Kontakt kommen;
- Gehäuftes Auftreten von Diagnosemeldung hinsichtlich von Positionen der entsprechenden Feldgeräte in der Anlage;
- Gehäuftes Auftreten von Diagnosemeldungen hinsichtlich von Umwelteinflüssen auf die entsprechenden Feldgeräte;
- Gehäuftes Auftreten von Diagnosemeldungen hinsichtlich des Alters der Feldgeräte;
- Gehäuftes Auftreten von Diagnosemeldungen hinsichtlich einer Einbauhöhe der entsprechenden Feldgeräte;
- Gehäuftes Auftreten von Diagnosemeldungen hinsichtlich einer Einbauart der entsprechenden Feldgeräte;
- Gehäuftes Auftreten von Diagnosemeldungen hinsichtlich einer Versionsnummer einer Firmware der Feldgeräte;
- Gehäuftes Auftreten von Diagnosemeldungen hinsichtlich einer Versionsnummer eines Kommunikationsprotokolls der Feldgeräte;
- Gehäuftes Auftreten von Diagnosemeldungen anhand von Materialeigenschaften der Feldgeräte;
- Gehäuftes Auftreten von Diagnosemeldungen hinsichtlich einer Energieversorgung der Feldgeräte; oder
- Gehäuftes Auftreten von Diagnosemeldung hinsichtlich von Wartungs- und/oder Austauschplänen der Feldgeräte.

Unter der Einbauart wird insbesondere die Drehung, bzw. der Neigungsgrad bezeichnet, mit welcher die Feldgeräte am Applikationsort angebracht sind.

Unter der Einbauhöhe wird insbesondere die Höhe über dem Meeresspiegel, in welcher sich die Feldgeräte befinden, bezeichnet. Es kann sich aber auch um eine Höhe mit einem anderen Bezugslevel, beispielsweise dem Boden der Anlage, handeln.

Bei den Materialeigenschaften handelt es sich beispielsweise um das Material des Gehäuses des Feldgerätes. Ein Metallgehäuse kann beispielsweise andere Eigenschaften bezüglich des EMV-Schutzes zeigen als ein Gehäuse aus Kunststoff.

Die Erfindung wird anhand der nachfolgenden Figuren näher erläutert. Es zeigen
Fig. 1: eine Ausgestaltung des erfindungsgemäßen Systems; und
Fig. 2: ein Verfahren zur Zustandsüberwachung einer Anlage der Prozessautomatisierung gemäß dem Stand der Technik.

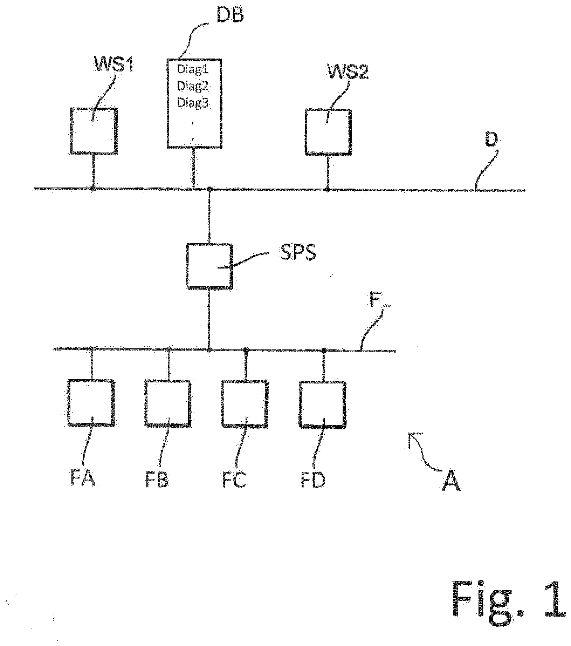

Fig. 1 zeigt ein Ausführungsbeispiel des erfindungsgemäßen Verfahrens.

Hierbei ist eine Anlage A der Automatisierungstechnik dargestellt. An einem Datenbus D sind mehrere Rechnereinheiten WS1, WS2 in Form von Workstation-PCs in der Leitebene der Anlage A angeschlossen. Diese Rechnereinheiten dienen als übergeordnete Einheiten (Leitsystem bzw. Steuereinheit), unter anderem zur Prozessvisualisierung, Prozessüberwachung und zum Engineering wie zum Bedienen und Überwachen von Feldgeräten. Der Datenbus D arbeitet z. B. nach dem Profibus DP-Standard oder nach dem HSE (High Speed Ethernet)-Standard der Foundation Fieldbus. Über eine Kommunikationseinheit SPS, in diesem Beispiel eine speicherprogrammierbare Steuereinheit SPS, ist die Leitebene der Anlage A mit einem Segment der Anlage A mehreren Feldgeräten FA, FB, FC, FD, verbunden. Die Verbindung der Kommunikationseinheit mit den Feldgeräten FA, FB, FC, FD erfolgt über einen Feldbus D, über welchen die Feldgeräte FA, FB, FC, FD auch miteinander verbunden sind. Bei den Feldgeräten FA, FB, FC, FD kann es sich sowohl um Sensoren, als auch um Aktoren handeln. Der Feldbus F arbeitet entsprechend einem der bekannten Feldbusstandards z.B. Profibus, Foundation Fieldbus oder HART. Neben diesem Segment der Anlage A weist die Anlage A mehrere weitere, hier nicht abgebildete Segmente auf, in die den in den jeweiligen Segmenten befindlichen Feld über weitere Kommunikationseinheiten SPS, beispielsweise auch Gateways oder Remote-IOs mit der Leitebene der Anlage A verbunden sind.

Diagnosemeldungen Diag1, Diag2, Diag3, welche von den Feldgeräten erstellt werden, werden in einer Datenbank DB gespeichert, die mit dem Datenbus D verbunden ist oder sich auf einem der Workstation-PCs WS1, WS2 in der Leitebene der Anlage A befindet. Alternativ befindet sich die Datenbank DB in einer Cloud-Umgebung und ist beispielsweise mittels des Internets kontaktierbar.

Um Fehlfunktionen oder Änderungen der Gerätezustände der in der Anlage A befindlichen Feldgeräte FA, FB, FC, FD zu analysieren, bzw. um deren Ursache zu bestimmen, wird das erfindungsgemäße Verfahren angewandt. In der in Fig. 1 gezeigten Anlage A besteht beispielsweise das Problem, dass die Kommunikation bestimmter Feldgeräte FA, FB, FC, FD immer wieder gestört ist.

In einem ersten Verfahrensschritt werden die in der Datenbank DB gespeicherten Diagnosemeldungen Diag1, Diag2, Diag3 extrahiert. Beispielsweise werden diese mittels einer Rechnereinheit des Benutzers, beispielsweise ein Laptop, ausgelesen. Die Diagnosemeldungen Diag1, Diag2, Diag3 können alternativ aber auch auf ein Speichermedium übertragen werden, welches anschließend von der Recheneinheit des Benutzers ausgelesen wird.

In einem zweiten Verfahrensschritt werden die Diagnosemeldungen Diag1, Diag2, Diag3 anhand eines oder mehrerer Auswahlkriterien gefiltert. In diesem Ausführungsbeispiel werden die Feldgeräte FA, FB, FC, FD anhand von spezifischen Diagnosemeldungen Diag1, Diag2, Diag3 gefiltert. Konkret handelt es sich um Kommunikationsabbrüche bei der Verbindung zwischen den Kommunikationseinheiten SPS und den an diesen angeschlossenen Feldgeräten FA, FB, FC, FD. Nur diejenigen Diagnosemeldungen Diag1, Diag2, Diag3, welche diese Kommunikationsabbrüche beinhalten, werden für die nächsten Verfahrensschritte verwendet. Die restlichen Diagnosemeldungen Diag1, Diag2, Diag3 werden für die weiteren Verfahrensschritte aussortiert.

In einem dritten Verfahrensschritt werden die gefilterten Diagnosemeldungen Diag1, Diag2, Diag3 mit Zeitstempeln versehen. Diese Zeitstempel stellen das genaue Datum und die Uhrzeit dar, an welchem die Diagnosemeldungen von den jeweiligen Feldgeräten FA, FB, FC, FD erstellt wurden.

In einem vierten Verfahrensschritt werden Zeitintervalle Δt festgelegt und die Diagnosemeldungen Diag1, Diag2, Diag3 entsprechend deren Zeitstempeln in die festgelegten Zeitintervalle Δt eingruppiert. In diesem Beispiel wurden die Diagnosemeldungen Diag1, Diag2, Diag3 der Feldgeräte FA, FB, FC, FD über den Gesamtzeitraum T von zwei Jahren gesammelt. Ein Zeitintervall Δt beträgt hier eine Woche.

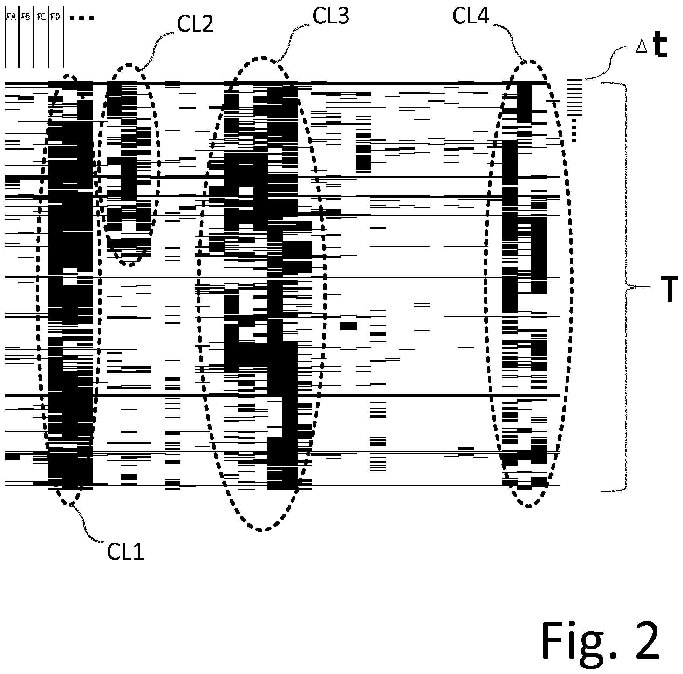

In einem finalen Verfahrensschritt werden die eingruppierten Diagnosemeldungen Diag1, Diag2, Diag3 hinsichtlich definierter Auffälligkeiten ausgewertet. Hierfür ist in Fig. 2 eine Heatmap dargestellt.

Auf der Abszissenachse der Heatmap befinden sich die jeweiligen gefilterten Feldgeräte FA, FB, FC, FD, welche mit der in Abb. 1 gezeigten speicherprogrammierbaren Steuerung SPS in Kommunikationsverbindung stehen. Auf der Ordinatenachse befinden sich die Zeitintervalle Δt. Selbstverständlich kann die Belegung der jeweiligen Achsen auch umgekehrt erfolgen, so dass die Zeitintervalle Δt auf der Abszissenachse und die Feldgeräte FA, FB, FC, FD auf der Ordinatenachse angeordnet sind.

Die Zeitpunkte des Auftretens der Diagnosemeldungen Diag1, Diag2, Diag3, also die in den Zeitstempeln enthaltenen Zeitpunkte, bei denen ein Kommunikationsfehler jeweils aufgetreten ist, werden für jedes Feldgerät FA, FB, FC, FD innerhalb des entsprechenden Zeitintervalls Δt markiert, hier mittels eines schwarzen Balkens. Hierdurch wird ein Raster erzeugt. Liegt die Heatmap in farbiger Darstellung vor, so kann die Häufigkeit der Diagnosemeldungen Diag1, Diag2, Diag3 innerhalb eines spezifischen Zeitintervalls Δt durch farbige Variation der Balken abgebildet werden. Je enger die Zeitintervalle Δt gewählt werden, desto feiner ist das Raster und dementsprechend komplexer wird eine Auswertung. Je größer die Zeitintervalle Δt gewählt werden, desto weiter wird das Raster, wodurch zwar die Auswertung vereinfacht werden kann, aber möglicherweise Informationen, welche zur Auffindung der Ursache der Kommunikationsprobleme relevant sind, verloren gehen. Gegebenenfalls sollte die Größe der Zeitintervalle Δt zumindest einmal variiert werden, um die ideale Größe zu ermitteln.

In einer simplen Heatmap, wie die in Fig. 2 abgebildete, kann ein Auswerten dieser Heatmap von Hand vorgenommen werden. So ist ersichtlich, dass es mehrere Auffälligkeiten CL1, CL2, CL3, CL4 gibt. Es handelt sich hierbei um ein gehäuftes Auftreten von Kommunikationsfehlern bei bestimmten Feldgeräten, wobei Kommunikationsfehler bei den übrigen Feldgeräten nur sporadisch auftreten. In diesem Fall erkennt ein geschulter Servicetechniker schnell, dass die Ursache dieser speziellen Kommunikationsfehler entweder in den Anschlüssen der Kommunikationseinheit SPS (bspw. korrodierte Anschlussbuchsen) oder in den von der Kommunikationseinheit SPS wegführenden Verkabelungen liegt.

Für komplexere Szenarien kann die Heatmap elektronisch mittels Algorithmen zur Clusterdetektion auf Auffälligkeiten untersucht werden. Alternativ zur Heatmap kann die Darstellung auch in tabellarischer Form erzeugt werden und diese elektronisch analysiert werden.

Es versteht sich von selbst, dass die gezeigten Ausführungsbeispiele ausschließlich beispielhafter Natur sind und das erfindungsgemäße Verfahren mit jeglicher Art und Anordnung von Feldgeräten FA, FB, FC, FD ausführbar sind. Des Weiteren können beliebige weitere Filterungs-, und Auswertemechanismen, sowie die Auswertung nach beliebigen weiteren Auffälligkeiten CL1, CL2, CL3, CL4, in Verbindung mit dem erfindungsgemäßen Verfahren angewandt werden.

### Bezugszeichenliste

- Δt: Zeitintervall
- A: Anlage der Prozessautomatisierung
- D: Datenbus, Kommunikationsnetzwerk
- DB: Datenbank
- Diag1, Diag2, Diag3: Diagnosemeldungen
- F: Feldbus, Kommunikationsnetzwerk
- FA, FB, FC, FD: Feldgerät
- CL1, CL2, CL3, CL4: Auffälligkeiten (Cluster)
- SPS: Kommunikationseinheit, speicherprogrammierbare Steuerung
- T: Gesamtzeitraum
- WS1, WS2: Workstation-PC

## Patentansprüche

1. Verfahren zur Analyse von Fehlfunktionen und/oder Änderungen von Gerätezuständen in einer Anlage (A) der Automatisierungstechnik, wobei die Anlage (A) eine Vielzahl von Feldgeräten (FA, FB, FC, FD) aufweist, wobei die Feldgeräte (FA, FB, FC, FD) über ein Kommunikationsnetzwerk (D, F) untereinander auf direkte Weise oder über zumindest eine Kommunikationseinheit (SPS), insbesondere ein Gateway, eine Steuereinheit oder ein Remote-IO, in Kommunikationsverbindung stehen und dazu ausgestaltet sind, in Abhängigkeit von einer Fehlfunktion und/oder Änderungen von Gerätezuständen der in der Anlage (A) befindlichen Feldgeräte (FA, FB, FC, FD) eine entsprechende Diagnosemeldung (Diag1, Diag2, Diag3) zu erstellen, und wobei die Diagnosemeldungen (Diag1, Diag2, Diag3) an eine Datenbank (DB) übermittelt und in dieser gespeichert sind, umfassend:
- Auslesen der Diagnosemeldungen (Diag1, Diag2, Diag3) aus der Datenbank;
- Filtern der ausgelesenen Diagnosemeldungen (Diag1, Diag2, Diag3) anhand zumindest eines Auswahlkriteriums;
- Verknüpfung der gefilterten Diagnosemeldungen (Diag1, Diag2, Diag3) mit Zeitstempeln, wobei ein Zeitstempel ein Datum des Auftretens einer in der entsprechenden Diagnosemeldung (Diag1, Diag2, Diag3) enthaltenden Fehlfunktion enthält;
- Festlegen von, insbesondere gleich großen, Zeitintervallen (Δt);
- Eingruppieren der mit den Zeitstempeln verknüpften Diagnosemeldungen (Diag1, Diag2, Diag3) in die festgelegten Zeitintervalle (Δt) entsprechend deren Zeitstempel;
- Auswerten der eingruppierten Diagnosemeldungen (Diag1, Diag2, Diag3) hinsichtlich definierter Auffälligkeiten (CL1, CL2, CL3, CL4), wobei die eingruppierten Diagnosedaten anhand eines aus den eingruppierten Diagnosemeldungen (Diag1, Diag2, Diag3) erstellten Diagramms, insbesondere einer Heatmap, ausgewertet werden, **dadurch gekennzeichnet, daß** sich auf einer ersten Achse des Diagramms die Feldgeräte (FA, FB, FC, FD) befinden, wobei auf einer zweiten Achse des Diagramms die festgelegten Zeitintervalle (Δt) dargestellt sind, wobei im Falle, dass eine der Diagnosemeldungen (Diag1, Diag2, Diag3) innerhalb eines der Zeitintervalle (Δt) eingruppiert ist, der Schnittpunkt zwischen dem jeweiligen Zeitintervall (Δt) und dem entsprechenden Feldgerät (FA, FB, FC, FD) markiert wird, und wobei eine Rechnereinheit das Diagramm im Zuge des Auswertens mittels auf der Rechnereinheit implementierten Algorithmen zur Bild- oder Mustererkennung und/oder Algorithmen zur Clusterdetektion auf die definierten Auffälligkeiten untersucht, wobei anhand des Auswertens ein Vorschlag zur Behebung einer Ursache der Fehlfunktionen und/oder der Änderungen der Gerätezustände erstellt wird.

2. Verfahren nach Anspruch 1,
wobei die Diagnosemeldungen (Diag1, Diag2, Diag3) bei Auftreten zumindest einer der folgenden Fehlfunktionen, bzw. Änderungen von Gerätezuständen eines Feldgeräts (FA, FB, FC, FD) erstellt werden:
- Ein Kommunikationsfehler des Feldgeräts (FA, FB, FC, FD);
- Unzureichende Energieversorgung oder Abschalten, bzw. Neustarten des Feldgeräts (FA, FB, FC, FD);
- Ein Wartungsbedarf des Feldgeräts (FA, FB, FC, FD);
- Ein Messfehler des Feldgeräts (FA, FB, FC, FD);
- Ein Fehler von zumindest einer Elektronikkomponente des Feldgeräts (FA, FB, FC, FD);
- Ein Fehler von zumindest einer Softwarekomponente des Feldgeräts (FA, FB, FC, FD); oder
- Ein Über- und/oder Unterschreiten von definierten Messbereichen.

3. Verfahren nach zumindest einem der vorherigen Ansprüche, wobei die ausgelesenen Diagnosemeldungen anhand zumindest einem der folgenden Auswahlkriterien gefiltert werden:
- anhand des Gerätetyps der Feldgeräte (FA, FB, FC, FD);
- anhand der Art der Fehlfunktion, bzw. der Änderung des Gerätezustands;
- anhand eines Anlagensektors, in der die jeweiligen Feldgeräte (FA, FB, FC, FD) integriert sind;
- anhand der jeweiligen Kommunikationseinheit (SPS), mit welcher die entsprechenden Feldgeräte (FA, FB, FC, FD) in Kommunikationsverbindung stehen;
- anhand einer jeweiligen Kommunikationsstruktur der Feldgeräte (FA, FB, FC, FD);
- anhand von Umwelteinflüssen, welche auf die entsprechenden Feldgeräte (FA, FB, FC, FD) einwirken;
- anhand einer Betriebsdauer der jeweiligen Feldgeräte (FA, FB, FC, FD);
- anhand des Alters der Feldgeräte (FA, FB, FC, FD);
- anhand einer Seriennummer und/oder anhand eines Bereichs von Seriennummern;
- anhand einer Produktcharge der Feldgeräte (FA, FB, FC, FD);
- anhand von verwendeten Bauteilen eines Lieferanten für die Anlage (A); oder
- anhand der jeweiligen Kommunikationseinheit (SPS), mit welcher die entsprechenden Feldgeräte (FA, FB, FC, FD) in Kommunikationsverbindung stehen.

4. Verfahren nach zumindest einem der vorherigen Ansprüche, wobei die eingruppierten Diagnosemeldungen (Diag1, Diag2, Diag3) hinsichtlich zumindest einer der folgenden Auffälligkeiten (CL1, CL2, CL3, CL4) ausgewertet werden:
- Gehäuftes Auftreten von Diagnosemeldungen (Diag1, Diag2, Diag3) eines oder mehrerer der Feldgeräte (FA, FB, FC, FD) während eines der festgelegten Zeitintervalle (Δt);
- Gehäuftes Auftreten von Diagnosemeldungen (Diag1, Diag2, Diag3) hinsichtlich eines bestimmten Gerätetyps der Feldgeräte (FA, FB, FC, FD);
- Gehäuftes Auftreten von Diagnosemeldungen (Diag1, Diag2, Diag3) hinsichtlich einer jeweiligen Kommunikationsstruktur der Feldgeräte (FA, FB, FC, FD);
- Gehäuftes Auftreten von Diagnosemeldungen (Diag1, Diag2, Diag3) hinsichtlich eines jeweiligen Kommunikationsprotokolls der Feldgeräte (FA, FB, FC, FD);
- Gehäuftes Auftretung von Diagnosemeldungen (Diag1, Diag2, Diag3) hinsichtlich von Prozessparametern der Feldgeräte (FA, FB, FC, FD);
- Gehäuftes Auftreten von Diagnosemeldungen (Diag1, Diag2, Diag3) hinsichtlich eines Prozessmediums, mit welchem die entsprechenden Feldgeräte (FA, FB, FC, FD) in Kontakt kommen;
- Gehäuftes Auftreten von Diagnosemeldung hinsichtlich von Positionen der entsprechenden Feldgeräte (FA, FB, FC, FD) in der Anlage (A);
- Gehäuftes Auftreten von Diagnosemeldungen (Diag1, Diag2, Diag3) hinsichtlich von Umwelteinflüssen auf die entsprechenden Feldgeräte (FA, FB, FC, FD);
- Gehäuftes Auftreten von Diagnosemeldungen (Diag1, Diag2, Diag3) hinsichtlich des Alters der Feldgeräte (FA, FB, FC, FD);
- Gehäuftes Auftreten von Diagnosemeldungen (Diag1, Diag2, Diag3) hinsichtlich einer Einbauhöhe der entsprechenden Feldgeräte (FA, FB, FC, FD);
- Gehäuftes Auftreten von Diagnosemeldungen (Diag1, Diag2, Diag3) hinsichtlich einer Einbauart der entsprechenden Feldgeräte (FA, FB, FC, FD);
- Gehäuftes Auftreten von Diagnosemeldungen (Diag1, Diag2, Diag3) hinsichtlich einer Versionsnummer einer Firmware der Feldgeräte (FA, FB, FC, FD);
- Gehäuftes Auftreten von Diagnosemeldungen (Diag1, Diag2, Diag3) hinsichtlich einer Versionsnummer eines Kommunikationsprotokolls der Feldgeräte (FA, FB, FC, FD);
- Gehäuftes Auftreten von Diagnosemeldungen (Diag1, Diag2, Diag3) anhand von Materialeigenschaften der Feldgeräte (FA, FB, FC, FD);
- Gehäuftes Auftreten von Diagnosemeldungen (Diag1, Diag2, Diag3) hinsichtlich einer Energieversorgung der Feldgeräte (FA, FB, FC, FD); oder
- Gehäuftes Auftreten von Diagnosemeldungen (Diag1, Diag2, Diag3) hinsichtlich von Wartungs- und/oder Austauschplänen der Feldgeräte (FA, FB, FC, FD).

## Claims

1. Procedure for the analysis of malfunctions and/or changes of the state of devices in a system (A) used in automation engineering, wherein said system (A) has multiple field devices (FA, FB, FC, FD), wherein said field devices (FA, FB, FC, FD) have a communication connection with one another via a communication network (D, F), either directly or via at least a communication unit (PLC), particularly a gateway, a control unit or a remote I/O, and wherein said devices are designed to generate an appropriate diagnostic message (Diag1, Diag2, Diag3) depending on a malfunction and/or changes of state of the field devices (FA, FB, FC, FD) located in the system (A), and wherein the diagnostic messages (Diag1, Diag2, Diag3) are transmitted to a database (DB) and are saved in same, wherein said procedure comprises the following steps:
- Reading the diagnostic messages (Diag1, Diag2, Diag3) out of the database;
- Filtering of the diagnostic messages that are read out (Diag1, Diag2, Diag3) using at least one selection criterion;
- Linking of the filtered diagnostic messages (Diag1, Diag2, Diag3) with timestamps, wherein a timestamp contains a date of occurrence of a malfunction contained in the corresponding diagnostic message (Diag1, Diag2, Diag3);
- Definition of time intervals (Δt), particularly of the same size;
- Grouping of the diagnostic messages (Diag1, Diag2, Diag3) linked with the timestamps into the defined time intervals (Δt) according to their timestamp;
- Evaluation of the grouped diagnostic messages (Diag1, Diag2, Diag3) with regard to defined anomalies (CL1, CL2, CL3, CL4), wherein the grouped diagnostic data is evaluated using a diagram, particularly a heatmap, created from the grouped diagnostic messages (Diag1, Diag2, Diag3),
**characterized in that** the field devices (FA, FB, FC, FD) are located on a first axis of the diagram, wherein the defined time intervals (Δt) are represented on a second axis of the diagram, wherein in the event that one of the diagnostic messages (Diag1, Diag2, Diag3) is grouped in one of the time intervals (Δt), the point of intersection between the respective time interval (Δt) and the corresponding field device (FA, FB, FC, FD) is marked, and wherein a computer unit examines the diagram for the defined anomalies, during the evaluation process, using algorithms implemented on the computer unit for detecting images or patterns and/or algorithms for cluster detection, wherein, on the basis of the evaluation, a proposal to rectify a cause of the malfunctions and/or of the changes of state of the devices is created.

2. Procedure as claimed in Claim 1, wherein the diagnostic messages (Diag1, Diag2, Diag3) are created when at least one of the following malfunctions occur, or changes in the state of a field device (FA, FB, FC, FD) occur:
- A communication error of the field device (FA, FB, FC, FD);
- Insufficient energy supply or switch-off, or restarting of the field device (FA, FB, FC, FD).
- A need for maintenance for the field device (FA, FB, FC, FD);
- A measured error of the field device (FA, FB, FC, FD);
- A fault of at least an electronic component of the field device (FA, FB, FC, FD);
- A fault of at least a software component of the field device (FA, FB, FC, FD); or
- An overshooting or undershooting of defined measuring ranges.

3. Procedure as claimed in at least one of the previous claims, wherein the diagnostic messages that are read out are filtered using at least one of the following selection criteria:
- on the basis of the device type of field devices (FA, FB, FC, FD);
- on the basis of the type of malfunction or change of device state;
- on the basis of a system sector in which the respective field devices (FA, FB, FC, FD) are integrated;
- on the basis of the respective communication unit (PLC) with which the corresponding field devices (FA, FB, FC, FD) have a communication connection;
- on the basis of a communication structure of the field devices (FA, FB, FC, FD);
- on the basis of environmental influences acting on the field devices (FA, FB, FC, FD);
- on the basis of an operating duration of the respective field devices (FA, FB, FC, FD);
- on the basis of the age of the field devices (FA, FB, FC, FD);
- on the basis of a serial number and/or on the basis of a range of serial numbers;
- on the basis of a product batch of the field devices (FA, FB, FC, FD);
- on the basis of the utilized components of a supplier for the system (A); or
- on the basis of the respective communication unit (PLC) with which the respective field devices (FA, FB, FC, FD) have a communication connection.

4. Procedure as claimed in at least one of the previous claims, wherein the grouped diagnostic messages (Diag1, Diag2, Diag3) are evaluated with regard to at least one of the following anomalies (CL1, CL2, CL3, CL4):
- Frequent occurrence of diagnostic messages (Diag1, Diag2, Diag3) of one or more of the field devices (FA, FB, FC, FD) during one of the specified time intervals (Δt);
- Frequent occurrence of diagnostic messages (Diag1, Diag2, Diag3) regarding a certain device type of the field devices (FA, FB, FC, FD);
- Frequent occurrence of diagnostic messages (Diag1, Diag2, Diag3) regarding a particular communication structure of the field devices (FA, FB, FC, FD);
- Frequent occurrence of diagnostic messages (Diag1, Diag2, Diag3) regarding a communication protocol of the field devices (FA, FB, FC, FD);
- Frequent occurrence of diagnostic messages (Diag1, Diag2, Diag3) regarding process parameters of the field devices (FA, FB, FC, FD);
- Frequent occurrence of diagnostic messages (Diag1, Diag2, Diag3) regarding a process medium with which the corresponding field devices (FA, FB, FC, FD) come into contact;
- Frequent occurrence of diagnostic messages regarding the positions of the corresponding field devices (FA, FB, FC, ED) in the system (A);
- Frequent occurrence of diagnostic messages (Diag1, Diag2, Diag3) regarding environmental influences on the corresponding field devices (FA, FB, FC, FD);
- Frequent occurrence of diagnostic messages (Diag1, Diag2, Diag3) regarding the age of the corresponding field devices (FA, FB, FC, FD);
- Frequent occurrence of diagnostic messages (Diag1, Diag2, Diag3) regarding an installation height of the corresponding field devices (FA, FB, FC, FD);
- Frequent occurrence of diagnostic messages (Diag1, Diag2, Diag3) regarding a type of installation of the corresponding field devices (FA, FB, FC, FD);
- Frequent occurrence of diagnostic messages (Diag1, Diag2, Diag3) regarding a version number of a firmware of the field devices (FA, FB, FC, FD);
- Frequent occurrence of diagnostic messages (Diag1, Diag2, Diag3) regarding a version number of a communication protocol of the field devices (FA, FB, FC, FD);
- Frequent occurrence of diagnostic messages (Diag1, Diag2, Diag3) on the basis of material properties of the field devices (FA, FB, FC, FD);
- Frequent occurrence of diagnostic messages (Diag1, Diag2, Diag3) regarding an energy supply of the field devices (FA, FB, FC, FD); or
- Frequent occurrence of diagnostic messages (Diag1, Diag2, Diag3) regarding the maintenance and/or replacement schedules of the field devices (FA, FB, FC, FD).

## Revendications

1. Procédé destiné à l'analyse de dysfonctionnements et/ou de modifications d'états d'appareils dans une installation (A) de la technique d'automatisation, l'installation (A) comportant une pluralité d'appareils de terrain (FA, FB, FC, FD), les appareils de terrain (FA, FB, FC, FD) étant en liaison de communication entre eux par l'intermédiaire d'un réseau de communication (D, F), de manière directe ou par l'intermédiaire d'au moins une unité de communication (SPS), notamment une passerelle, une unité de commande ou un module E/S distant, et lesquels appareils sont conçus pour créer un message de diagnostic (Diag1, Diag2, Diag3) correspondant en fonction d'un dysfonctionnement et/ou de modifications d'états des appareils de terrain (FA, FB, FC, FD) se trouvant dans l'installation (A), et les messages de diagnostic (Diag1, Diag2, Diag3) étant transmis à une base de données (DB) et étant enregistrés dans celle-ci, lequel procédé comprend les étapes suivantes :
- Lecture des messages de diagnostic (Diag1, Diag2, Diag3) dans la base de données ;
- Filtrage des messages de diagnostic lus (Diag1, Diag2, Diag3) à l'aide d'au moins un critère de sélection ;
- Association des messages de diagnostic filtrés (Diag1, Diag2, Diag3) à des horodateurs, un horodateur contenant une date d'apparition d'un dysfonctionnement contenu dans le message de diagnostic (Diag1, Diag2, Diag3) correspondant ;
- Définition d'intervalles de temps (Δt), notamment de même taille ;
- Regroupement des messages de diagnostic (Diag1, Diag2, Diag3) associés aux horodateurs dans les intervalles de temps (Δt) définis en fonction de leur horodateur ;
- Évaluation des messages de diagnostic groupés (Diag1, Diag2, Diag3) en ce qui concerne des anomalies (CL1, CL2, CL3, CL4) définies, les données de diagnostic regroupées étant évaluées à l'aide d'un diagramme, notamment d'une carte de chaleur, établi à partir des messages de diagnostic regroupés (Diag1, Diag2, Diag3),
**caractérisé en ce que** les appareils de terrain (FA, FB, FC, FD) se trouvent sur un premier axe du diagramme, les intervalles de temps (Δt) définis étant représentés sur un deuxième axe du diagramme, dans le cas où l'un des messages de diagnostic (Diag1, Diag2, Diag3) est regroupé à l'intérieur de l'un des intervalles de temps (Δt), le point d'intersection entre l'intervalle de temps (Δt) respectif et l'appareil de terrain (FA, FB, FC, FD) correspondant est marqué, et une unité de calcul examine le diagramme au cours de l'évaluation au moyen d'algorithmes mis en œuvre sur l'unité de calcul pour la reconnaissance d'images ou de modèles et/ou d'algorithmes pour la détection de clusters en ce qui concerne les anomalies définies, une proposition étant établie à l'aide de l'évaluation pour éliminer une cause des dysfonctionnements et/ou des modifications des états des appareils.

2. Procédé selon la revendication 1, pour lequel les messages de diagnostic (Diag1, Diag2, Diag3) sont créés en cas d'apparition d'au moins l'un des dysfonctionnements suivants, ou de modifications d'états d'un appareil de terrain (FA, FB, FC, FD) :
- Une erreur de communication de l'appareil de terrain (FA, FB, FC, FD) ;
- Une alimentation en énergie insuffisante ou une mise hors tension, voire un redémarrage de l'appareil de terrain.
- Un besoin de maintenance de l'appareil de terrain (FA, FB, FC, FD) ;
- Une erreur de mesure de l'appareil de terrain (FA, FB, FC, FD) ;
- Une erreur d'au moins un composant électronique de l'appareil de terrain (FA, FB, FC, FD) ;
- Une erreur d'au moins un composant logiciel de l'appareil de terrain (FA, FB, FC, FD) ; ou
- Un dépassement par excès ou par défaut de gammes de mesure définies.

3. Procédé selon au moins l'une des revendications précédentes, pour lequel les messages de diagnostic lus sont filtrés à l'aide d'au moins l'un des critères de sélection suivants :
- à l'aide du type des appareils de terrain (FA, FB, FC, FD) ;
- à l'aide du type de dysfonctionnement ou de changement d'état d'appareil ;
- à l'aide d'un secteur d'installation dans lequel les appareils de terrain (FA, FB, FC, FD) respectifs sont intégrés ;
- à l'aide de l'unité de communication (SPS) respective, avec laquelle les appareils de terrain (FA, FB, FC, FD) correspondants sont en liaison de communication ;
- à l'aide d'une structure de communication respective des appareils de terrain (FA, FB, FC, FD) ;
- à l'aide des influences environnementales qui agissent sur les appareils de terrain (FA, FB, FC, FD) correspondants ;
- à l'aide d'une durée de fonctionnement des appareils de terrain (FA, FB, FC, FD) respectifs ;
- à l'aide de l'âge des appareils de terrain (FA, FB, FC, FD) ;
- à l'aide d'un numéro de série et/ou à l'aide d'une gamme de numéros de série ;
- à l'aide d'un lot de produits des appareils de terrain (FA, FB, FC, FD) ;
- à l'aide de composants utilisés d'un fournisseur pour l'installation (A) ; ou
- à l'aide de l'unité de communication (SPS) respective, avec laquelle les appareils de terrain (FA, FB, FC, FD) sont en liaison de communication.

4. Procédé selon au moins l'une des revendications précédentes, pour lequel les messages de diagnostic (Diag1, Diag2, Diag3) regroupés sont évalués en ce qui concerne au moins l'une des anomalies (CL1, CL2, CL3, CL4) suivantes :
- Apparition fréquente de messages de diagnostic (Diag1, Diag2, Diag3) d'un ou de plusieurs des appareils de terrain (FA, FB, FC, FD) pendant l'un des intervalles de temps (Δt) définis ;
- Apparition fréquente de messages de diagnostic (Diag1, Diag2, Diag3) concernant un certain type d'appareils de terrain (FA, FB, FC, FD) ;
- Apparition fréquente de messages de diagnostic (Diag1, Diag2, Diag3) concernant une structure de communication particulière des appareils de terrain (FA, FB, FC, FD) ;
- Apparition fréquente de messages de diagnostic (Diag1, Diag2, Diag3) concernant un protocole de communication respectif des appareils de terrain (FA, FB, FC, FD) ;
- Apparition fréquente de messages de diagnostic (Diag1, Diag2, Diag3) concernant des paramètres de process des appareils de terrain (FA, FB, FC, FD) ;
- Apparition fréquente de messages de diagnostic (Diag1, Diag2, Diag3) concernant un produit de process avec lequel les appareils de terrain (FA, FB, FC, FD) correspondants entrent en contact ;
- Apparition fréquente de messages de diagnostic concernant les positions des appareils de terrain (FA, FB, FC, ED) correspondants dans l'installation (A) ;
- Apparition fréquente de messages de diagnostic (Diag1, Diag2, Diag3) concernant les influences de l'environnement sur les appareils de terrain (FA, FB, FC, FD) correspondants ;
- Apparition fréquente de messages de diagnostic (Diag1, Diag2, Diag3) concernant l'âge des appareils de terrain (FA, FB, FC, FD) ;
- Apparition fréquente de messages de diagnostic (Diag1, Diag2, Diag3) concernant une hauteur de montage des appareils de terrain (FA, FB, FC, FD) correspondants ;
- Apparition fréquente de messages de diagnostic (Diag1, Diag2, Diag3) concernant un type de montage des appareils de terrain (FA, FB, FC, FD) correspondants ;
- Apparition fréquente de messages de diagnostic (Diag1, Diag2, Diag3) concernant un numéro de version d'un firmware des appareils de terrain (FA, FB, FC, FD) ;
- Apparition fréquente de messages de diagnostic (Diag1, Diag2, Diag3) concernant un numéro de version d'un protocole de communication des appareils de terrain (FA, FB, FC, FD) ;
- Apparition fréquente de messages de diagnostic (Diag1, Diag2, Diag3) sur la base de propriétés matérielles des appareils de terrain (FA, FB, FC, FD) ;
- Apparition fréquente de messages de diagnostic (Diag1, Diag2, Diag3) concernant une alimentation en énergie des appareils de terrain (FA, FB, FC, FD) ; ou
- Apparition fréquente de messages de diagnostic (Diag1, Diag2, Diag3) concernant les plans de maintenance et/ou de remplacement des appareils de terrain (FA, FB, FC, FD).
